# EUROPÄISCHE PATENTSCHRIFT

(11) **EP 0 261 161 B1**
(45) Veröffentlichungstag und Bekanntmachung des Hinweises auf die Patenterteilung: **26.05.1993**
(21) Anmeldenummer: 87901478.5
(22) Anmeldetag: 09.03.1987
(51) Int. Cl.: G02F 1/137, C09K 19/02, C09K 19/42

(54) **ELEKTROOPTISCHES ANZEIGEELEMENT**
ELECTRO-OPTICAL DISPLAY ELEMENT
ELEMENT D'AFFICHAGE ELECTRO-OPTIQUE

(30) Priorität: 19.03.1986 DE 3609141
(43) Veröffentlichungstag der Anmeldung: 30.03.1988
(73) Patentinhaber: MERCK PATENT GmbH, D-64271 Darmstadt (DE)
(72) Erfinder: BAUR, Günther, D-7800 Freiburg (DE); SCHEUBLE, Bernhard, Naka-ku, Yokohama-shi Kanagawa 231 (JP); FEHRENBACH, Waltraud, D-7830 Emmendingen (DE)
(86) Internationale Anmeldenummer: EP8700135
(87) Internationale Veröffentlichungsnummer: WO8705714

(56) Entgegenhaltungen:
- EP-A- 0 131 216
- MOLECULAR CRYSTALS & LIQUID CRYSTALS + LETTERS, Band 123, Nr. 1/4, 1983, New York, Us; C.M.WATERS et al.: "Design of highly multiplexed liquid crystal dye displays", Seiten 303-319
- DISPLAYS, Band 6, Nr. 3, Juli 1985, Guildford, Surrey, GB; J.F.CLERC: "Crystal liquid dot-matrix display using a multiplexed guest-host effect", Seiten 148-152
- JOURNAL OF APPLIED PHYSICS, Band 58, Nr. 8, Oktober 1985, Woodbury, New York, US; T.J.SCHEFFER et al.: "Investigation of the electro-optical properties of 270 chiral nematic layers in the birefringence mode", Seiten 3022-3031
- MOLECULAR CRYSTALS AND LIQUID CRYSTALS, Band 108, Nr. 3/4, New York, US; S. SHIKATA et al.: " The effects of material constants and device parameters on electro-optic characteristics of liquid crystal devices", Seiten 339-348

## Beschreibung

Die Erfindung betrifft ein elektrooptisches Anzeigeelement mit einer sehr geringen Blickwinkelabhängigkeit des Kontrastes und einer besonders steilen elektrooptischen Kennlinie.

Für Flüssigkristall-Anzeigeelemente werden die Eigenschaften nematischer oder nematisch-cholesterischer flüssigkristalliner Materialien ausgenutzt, ihre optischen Eigenschaften wie Lichtdurchlässigkeit, Lichtstreuung, Doppelbrechung, Reflexionsvermögen oder Farbe unter dem Einfluß elektrischer Felder signifikant Zu verändern. Die Funktion derartiger Anzeigeelemente beruht dabei beispielsweise auf den Phänomenen der dynamischen Streuung, der Deformation aufgerichteter Phasen, dem Schadt-Helfrich-Effekt in der verdrillten Zelle oder dem SBE-Effekt.

Unter diesen gebräuchlichen Typen von Flüssigkristall-Anzeigeelementen haben in letzter Zeit insbesondere großflächige Anzeigeelemente mit geringer Bautiefe und kleiner Leistungsaufnahme, die in der Lage sind große Informationsmengen darzustellen, zunehmend an Bedeutung gewonnen. Hochinformative Anzeigeelemente dieser Art werden in der elektronischen Datenverarbeitung, der Büroautomation - hierzu gehört unter anderem die elektonische Textverarbeitung - der Videoindustrie und in naher Zukunft auch der Automobilindustrie gefordert. Flüssigkristall-Displays sind aufgrund ihrer Eigenschaften für diese Anzeigesysteme prädestiniert. Großflächige hochinformative Flüssigkristall-Displays, die nematische Flüssigkristalle verwenden, werden im sogenannten Zeitmultiplex-Verfahren betrieben. Diese Ansteuerung ergibt nur dann Displays mit gutem und blickwinkelunabhängigem Kontrast, sofern die elektrooptische Kennlinie des Displays sehr steil ist. Solange keine Flüssigkristalle mit extrem kleinem Verhältnis der elastischen Konstanten für die Biegung und die Spreizung K₃/K₁ zur Verfügung stehen, sind der Steilheit der elektrooptischen Kennlinie einer TN-Zelle Grenzen gesetzt. Bekanntermaßen läßt sich der Kontrast verbessern, indem man den Twistwinkel, der bei der TN-Zelle 90° beträgt, vergrößert (EP-A-00 98 070; C.M. Waters, E.P. Raynes and V. Brimmel, Mol. Cryst. Liq. Cryst. 123 (1985) 303; Deutsche Offenlegungsschrift DE 34 23 993 A1; T.J. Scheffer and J. Nehring, J. Appl. Phys. 58 (1985) 3022; T.J. Scheffer and J. Nehring, Appl. Phys. Lett. 45 (1984) 1021). Während bei der TN-Zelle der Einfluß der verschiedenen Flüssigkristallparameter auf die Kennliniensteilheit und damit den Kontrast bekannt ist, herrscht bei Anzeigeelementen mit einem Twistwinkel > 90° noch weitgehend Unklarheit bezüglich der Bedeutung einiger Flüssigkristalleigenschaften. Der Einfluß der elastischen Konstanten auf den Kontrast eines Anzeigeelementes mit höherem Twistwinkel wird von T.J. Scheffer et al. überhaupt nicht diskutiert, von C.M. Waters et al. nur unter sehr stark vereinfachten Annahmen.

In der praktischen Anwendung gibt es somit bei der Supertwistzelle (TN-Zelle mit einem Twistwinkel > 90°, insbesondere dem Betrage nach 150 bis 250°, vorzugsweise entsprechend den oben angegebenen Literaturstellen) noch beträchtliche Schwierigkeiten. Dazu gehören vor allem die Realisierung einer steilen elektrooptischen Kennlinie und den damit verbundenen guten Kontrast, der darüberhinaus möglichst unabhängig vom Blickwinkel sein sollte.

Der Erfindung liegt die Aufgabe zugrunde, elektrooptische Anzeigeelemente mit hohem Twistwinkel zur Verfügung zu stellen, bei denen eine möglichst steile elektrooptische Kennlinie gewährleistet ist, zusammen mit einem maximalen Kontrast und einer minimalen Blickwinkelabhängigkeit.

Es wurde nun gefunden, daß für große Oberflächentiltwinkel das Verhältnis K₃/K₁ stets so groß wie möglich sein muß, um eine möglichst steile Kennlinie und damit einen optimalen Kontrast zu erzielen. Große Oberflächentiltwinkel lassen sich jedoch nur schwer bzw. mit Hilfe aufwendiger und damit teurer Methoden realisieren. Das einzige literaturbekannte Verfahren besteht in der Schrägbedampfung der Substratoberflächen mit SiO₂. Das in den Produktionslinien heutzutage eingesetzte Reiben organischer Schichten führt dagegen nur zu verhältnismäßig kleinen Oberflächentiltwinkel. Die durch das Reiben organischer Schichten erzielten Oberflächentiltwinkel führen bei dem von C.M. Waters et al. und T.J. Scheffer et al. favorisierten Twistwinkel von 3/2 π zu Domänenbildung und Streueffekten. In der Praxis realisierbar erscheint eine Kombination von einem Twistwinkel > 90° und einem Oberflächentiltwinkel von nicht mehr als 10°.

Überraschenderweise wurde nun gefunden, daß für kleine Oberflächentiltwinkel und Twistwinkel zwischen 150° und 250° ausschließlich bei Verwendung einer Flüssigkristall-Mischung mit einer geeigneten Kombination von Materialparametern insbesondere mit geeigneten Verhältnissen der elastischen Konstanten für die Biegung und die Verdrillung K₃/K₂ bzw. der elastischen Konstanten für die Biegung und die Spreizung K₃/K₁ eine steile Kennlinie bzw. ein guter und blickwinkelunabhängiger Kontrast resultiert.

Gegenstand der Erfindung ist somit ein Verfahren zur Verbesserung der Kontrastwirkung eines multiplexierbaren elektrooptischen Anzeigeelementes gemäß Anspruch 1. Ferner ist Gegenstand der Erfindung ein entsprechendes multiplexierbares, electrooptisches Anzeigeelement gemäß Anspruch 6.

Der Aufbau des erfindungsgemäßen Flüssigkristall-Anzeigeelementes aus Polarisatoren, Elektrodengrundplatten und Elektroden mit einer solchen Oberflächenbehandlung, daß die Vorzugsorientierung (Direktor) der jeweils daran angrenzenden Flüssigkristall-Moleküle von der einen zur anderen Elektrode gewöhnlich um betragsmäßig 150° bis 250° gegeneinander verdreht ist, entspricht der für derartige Anzeigeelemente üblichen Bauweise. Dabei ist der Begriff der üblichen Bauweise hier weit gefaßt und umfaßt auch alle literaturbekannten Abwandlungen und Modifikationen der Supertwistzelle, insbesondere auch Matrix-Anzeigeelemente sowie die zusätzlich Magnete enthaltenden Anzeigeelemente nach der DE-A-2 748 738. Der Oberflächentiltwinkel an den beiden Trägerplatten kann gleich oder verschieden sein. Gleiche Tiltwinkel sind bevorzugt.

Ein wesentlicher Unterschied der erfindungsgemäßen Anzeigeelemente zu den bisher üblichen auf der Basis der verdrillten nematischen Zelle besteht jedoch in der Wahl der Flüssigkristallparameter der Flüssigkristallschicht.

In den erfindungsgemäßen Anzeigeelementen werden flüssigkristalline Phasen eingesetzt, bei denen die Flüssigkristallparameter K₃/K₁ und K₃/K₂ so gewählt werden, daß eine möglichst steile elektrooptische Kennlinie gewährleistet ist, zusammen mit einem maximalen Kontrast und einer minimalen Blickwinkelabhängigkeit.

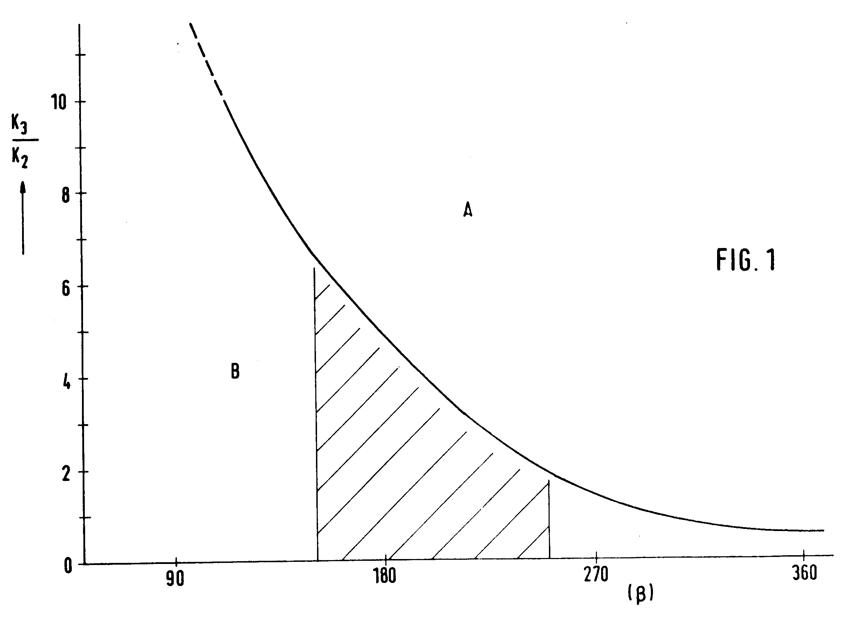

Abbildung 1 ist eine schematische Zeichnung, die veranschalicht, in welchen Bereichen K₃/K₁ einen entscheidenden Einfluß auf die Kontrastwirkung des Anzeigeelementes hat. Dargestellt ist das Verhältnis K₃/K₂ als Funktion des Twistwinkels (β) der Zelle für einen Oberflächentiltwinkel kleiner als 10°, bspw. α₀ = 1°. Die durchgezogene Linie trennt die Bereiche A und B. Während auf der durchgezogenen Linie und in deren unmittelbaren Umgebung das Verhältnis K₃/K₁ nur einen marginalen Einfluß auf die Kennliniensteilheit besitzt, muß das Verhältnis K₃/K₁ im Bereich A möglichst groß sein, um eine steile Kennlinie zu erhalten, im Bereich B dagegen möglichst klein. Außerdem muß berücksichtigt werden, daß die Kennlinie im Bereich A bistäbil ist, im Bereich B dagegen stabil. Im Hinblick auf die Vermeidung von Hystereseeffekten stellt eine stabile Kennlinie mit maximaler Steilheit die Ideallösung dar. Die ideale Kombination von Flüssigkristall- und Displayparametern wird in Abbildung 1 durch den schraffierten Bereich gekennzeichnet.

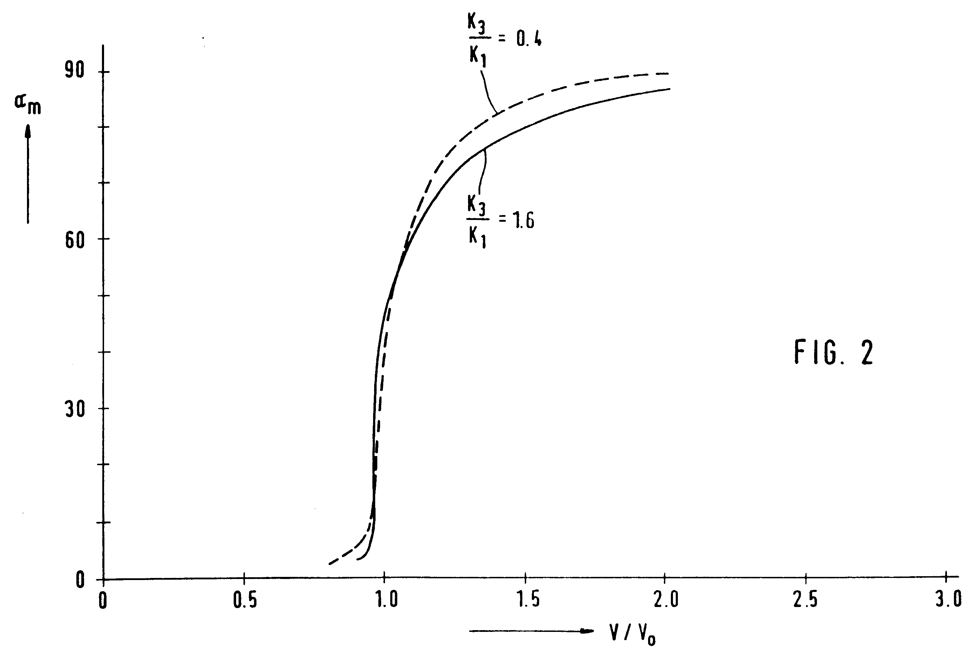

Der neu aufgefundene Einfluß von K₃/K₁ bei festgehaltenem K₃/K₂ und wohldefiniertem Twistwinkel und Oberflächentiltwinkel der Zelle, war aus dem Stand der Technik nicht zu entnehmen. Aus den publizierten Arbeiten über Supertwistzellen ging ferner nicht hervor, daß Bistabilität in der Regel nur über einen bestimmten Deformationsbereich auftritt. Dies wird in der Abb. 2 näher erläutert. Aufgetragen ist der Tiltwinkel αₘ in der Mitte der Flüssigkristallschicht als Funktion der durch die Schwellenspannung geteilten anliegenden Effektivspannung. Die Daten gelten für einen Twistwinkel von 160°, einen Oberflächentiltwinkel von 1° und ein K₃/K₂ von 2. Man erkennt aus der Abb. 2, daß für ein K₃/K₁ von 1,6 über einen verhältnismäßig kleinen Deformationsbereich Bistabilität auftritt. Bistabilität wird dabei so definiert, daß für ein und dasselbe V/Vₒ verschiedene αₘ-Werte aufgefunden werden, wohingegen bei der stabilen Kurve für K₃/K₁ = 0,4 stets eine eindeutige Zuordnung zwischen αₘ und V/Vₒ besteht. Für ein Anzeigeelement mit einem Twistwinkel > 90° ist der Bereich von 60° bis 85° für αₘ jedoch von ausschlaggebender Bedeutung. Deshalb führt nicht die Kurve für K₃/K₁ = 1,6 mit ihrem kleinen bistabilen Bereich, sondern die Kurve für K₃/K₁ = 0,4, die insgesamt steiler ist, zu besseren Transmissionskennlinien und damit besserem Kontrast. Dies wird in den folgenden Abbildungen erläutert.

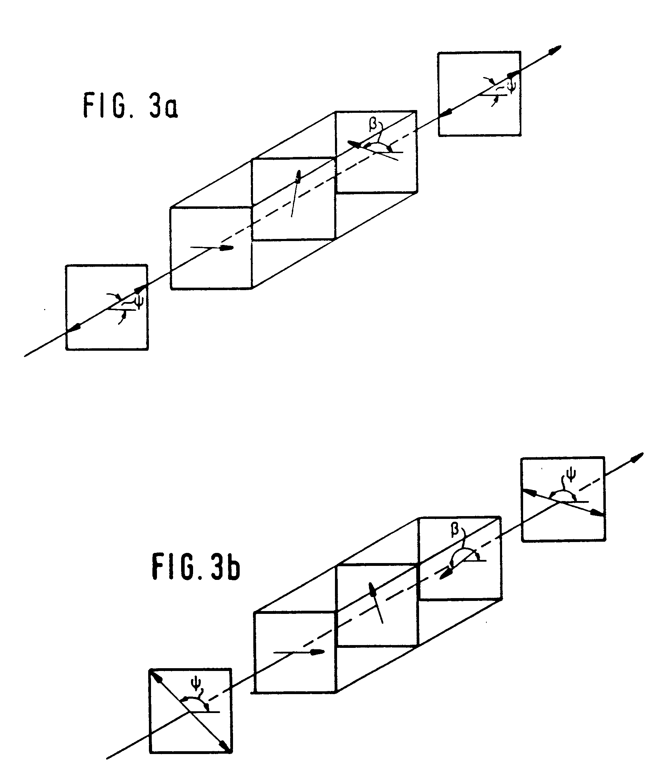

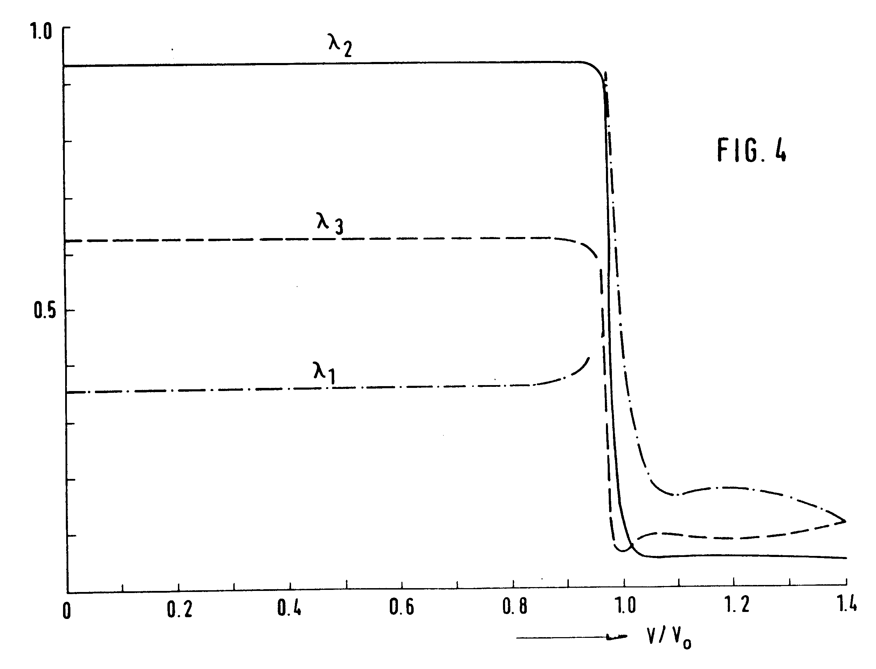

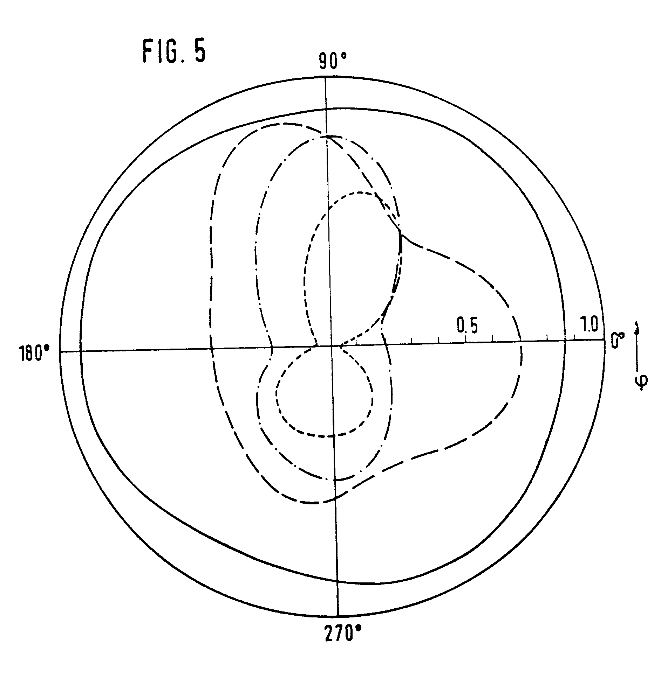

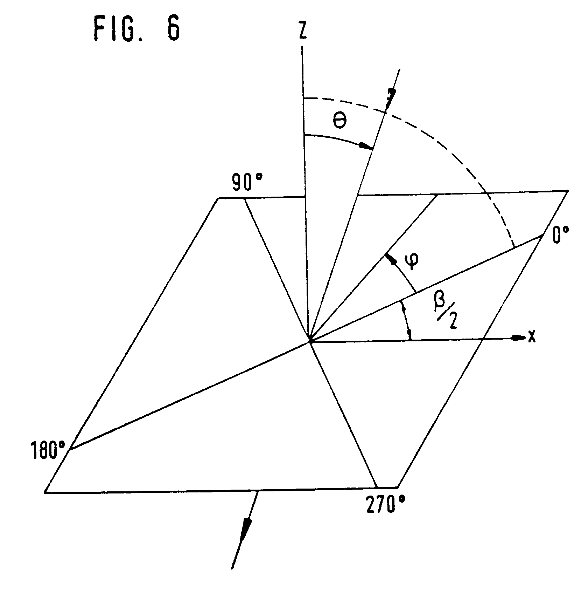

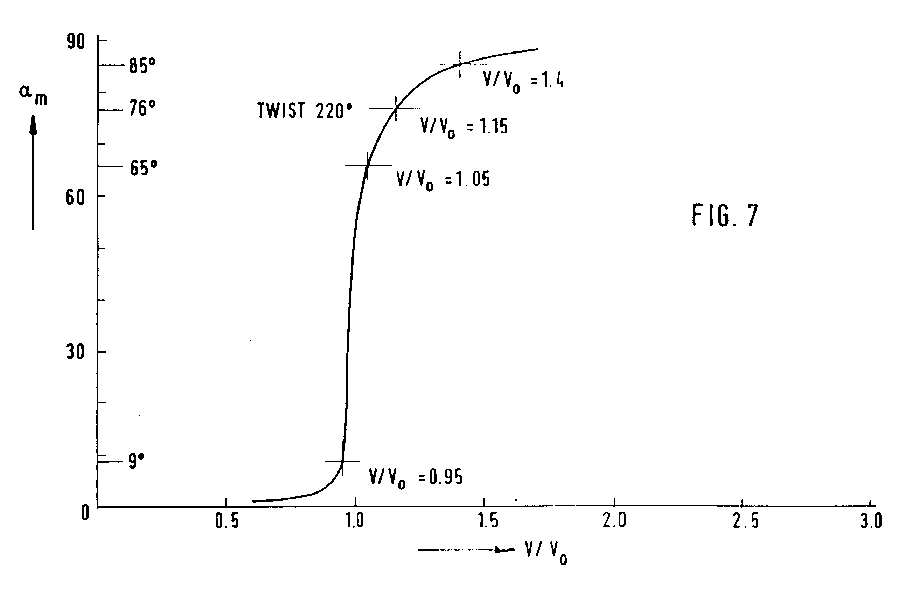

Abb. 3 zeigt die Definition der Polarisatorstellungen. Abb. 4 zeigt für einen Twistwinkel von 220° und eine bestimmte Polarisatoranordnung die Transmission als Funktion der Spannung für verschiedene Wellenlängen. Man erkennt aus der Abb. 4, daß dieses Display für 550 nm sehr schön zwischen dunkel und hell schaltet. Bei anderen Wellenlängen ergibt sich im Ein- und im Aus-Zustand jeweils eine Resttransmission, so daß das Display bei weißer Beleuchtung farbig erscheint. Mit der Abb. 4 soll gezeigt werden, daß durch geeignete Wahl von Material- und Displayparametern eine sehr steile Kennlinie realisiert werden kann. Die Kurven gelten für senkrechte Incidenz. Entscheidend für die Qualität eines Displays ist jedoch der Kontrast als Funktion des Blickwinkels. Dies wird in der Abb. 5 verdeutlicht. Angegeben ist jeweils in einem Polarkoordinatendiagramm für einen Twistwinkel von 220^{o}, einem Oberflächentiltwinkel von 1^{o} und einer Wellenlänge von 550 nm, für einen Beobachtungswinkel von 45^{o} die Transmission als Funktion des Blickwinkels ϑ für verschiedene V/Vₒ-Verhältnisse. Polarisatorstellungen sowie Material- und Zellenparameter sind in den Abbildungen 4 und 5 identisch. Den Kontrast erhält man, indem man bei entsprechenden ϑ-Winkeln die Transmissionswerte für V/Vₒ = 0,95 dividiert durch die Transmissionswerte bei den übrigen V/Vₒ-Verhältnissen. Die Beobachtungswinkel ϑ und φ sind in Abb. 6 definiert. Ganz offensichtlich erfordern gute Kontrastwerte verhältnismäßig hohe V/Vₒ-Werte oder anders ausgedrückt, αₘ-Werte zwischen 60^{o} und 85^{o} (vergleiche Abb. 7). Abb. 7 ergibt sich nur unter der besonderen Berücksichtigung des αₘ-Bereiches von 60° bis 85°. Gerade diesem Bereich kommt jedoch für die Qualität eines Anzeigeelements mit einem Twistwinkel > 90° essentielle Bedeutung zu.

Flüssigkristalline Dielektrika, deren Materialparameter in den erfindungsgemäßen Bereichen liegen, können aus üblichen flüssigkristallinen Basismaterialien hergestellt werden. Aus der Literatur sind zahlreiche derartige Materialien bekannt. Zweckmäßig enthalten die für die erfindungsgemäßen Anzeigeelemente im Bereich B von Abb. 1 verwendeten Dielektrika mindestens 15, vorzugsweise mindestens 30, insbesondere mindestens 95 Gewichtsprozent eines Gemisches aus mindestens zwei, vorzugsweise drei bis 15, insbesondere vier bis zehn flüssigkristallinen Verbindungen, die jeweils mindestens ein Strukturelement ausgewählt aus Reihe I bis XI enthalten, wobei die Strukturelemente I bis IV gegebenenfalls auch z.B. durch F, Cl, CH₃ und/oder CN substituiert sein können oder in Form der entsprechenden N-Oxide vorliegen können: 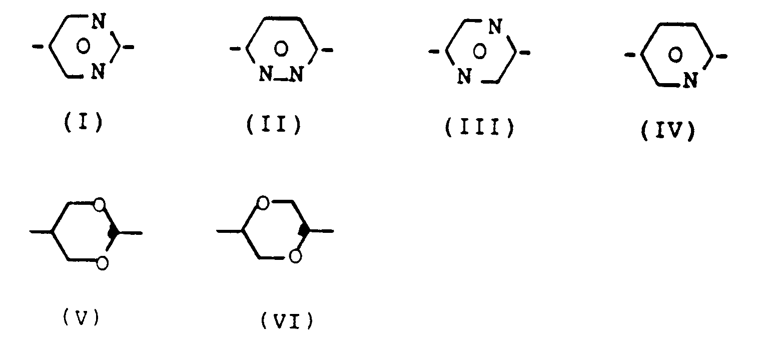 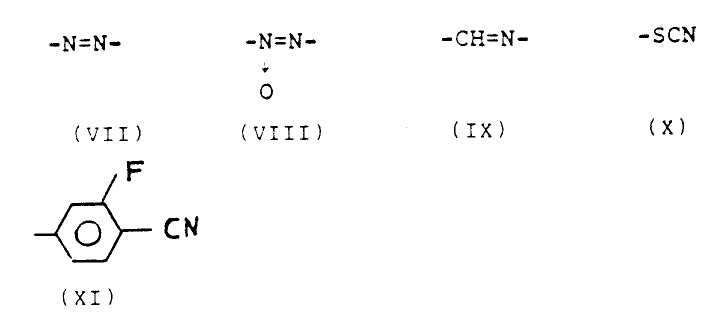
Vorzugsweise enthalten diese Flüssigkristallverbindungen zusätzlich eine 1,4-Phenylengruppe.

Der Anteil assoziierender Verbindungen wird möglichst klein gehalten, im allgemeinen < 30%, vorzugsweise < 20 %, insbesondere < 15%. Dies wird am ehesten erreicht durch den Einsatz von terminal polaren Komponenten mit den Strukturelementen X und/oder XI.

Die für die erfindungsgemäßen Anzeigeelemente im Bereich A von Abb. 1 verwendeten Dielektrika enthalten vorzugsweise einen möglichst hohen Anteil assoziierender Verbindungen. Zweckmäßig enthalten diese Dielektrika mindestens 15, vorzugsweise mindestens 30, insbesondere mindestens 60 Gewichtsprozent eines Gemisches aus mindestens zwei, vorzugsweise drei bis 15 flüssigkristallinen Verbindungen, die jeweils mindestens ein Strukturelement ausgewählt aus Reihe XII bis XIV enthalten : 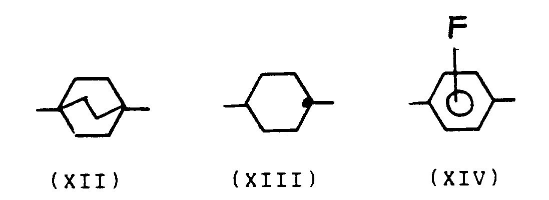
Vorzugsweise enthalten diese Flüssigkristallverbindungen zusätzlich eine 1,4-Phenylengruppe.

Derartige Dielektrika können zusätzlich Farb- und/oder Dotierstoffe in den gebräuchlichen Mengen enthalten, wenn dadurch die Flüssigkristallparameter nicht aus den erfindungsgemäßen Bereichen geführt werden.

Die folgenden Beispiele sollen die Erfindung erläutern, ohne sie zu begrenzen. Wenn nichts anderes angegeben ist, bedeuten Angaben von Prozent Gewichtsprozent. Alle Temperaturangäben bedeuten Grad Celsius.

### Beispiel 1

Eine Supertwiststzelle enthaltend ein Dielektrikum bestehend aus
16% p-trans-4-Propylcyclohexylbenzonitril,
21% trans-1-p-Ethylphenyl-4-propylcyclohexan,
20% trans-1-p-Methoxyphenyl-4-propylcyclohexan,
11% 4-Ethyl-4'-(trans-4-propylcyclohexyl)-biphenyl,
10% 4-Ethyl-4'-(trans-4-propylcyclohexyl)-biphenyl,
4% 4,4'-Bis-(trans-4-propylcyclohexyl)-biphenyl,
5% 4,4'-Bis-(trans-4-pentylcyclohexyl)-biphenyl,
3% 4,4'-Bis-(trans-4-propylcyclohexyl)-2-fluorbiphenyl,
6% 4-(trans-4-Pentylcyclohexyl)-4'-(trans-4-propylcyclohexyl)-biphenyl und
4% 4-(trans-4-Pentylcyclohexyl)-4'-(trans-4-propylcyclohexyl)-fluorbiphenyl
zeigt bei einem Twistwinkel von 220° eine steile elektrooptische Kennlinie und eine sehr geringe Blickwinkelabhängigkeit des Kontrastes.

### Beispiel 2

Eine Supertwistzelle enthaltend ein Dielektrikum bestehend aus
15% p-trans-4-Propylcyclohexylbenzonitril,
4% p-Ethylbenzoesäure-(3-fluor-4-cyanphenylester),
4% p-Propylbenzoesäure-(3-fluor-4-cyanphenylester),
17% trans, trans-4-Propyloxy-4'-propylcyclohexylcyclohexan,
14% trans, trans-4-Methoxy-4'-pentylcyclohexylcyclohexan,
13% trans, trans-4-Ethoxy-4'-pentylcyclohexylcyclohexan,
5% trans, trans-4-Propylcyclohexylcyclohexan-4-carbonsäure-trans-4-propylcyclohexylester,
5% trans, trans-4-Propylcyclohexylcyclohexan-4-carbonsäure-trans-4-pentylcyclohexylester,
5% trans, trans-4-Butylcyclohexylcyclohexan-4-carbonsäure-trans-4-propylcyclohexylester
5% trans, trans-4-Butylcyclohexylcyclohexan-4-carbonsäure-trans-4-pentylcyclohexylester,
4% 4.4'-Bis-(trans-4-propylcyclohexyl)-2-fluorbiphenyl,
4% 4,4'-Bis-(trans-4-pentylcyclohexyl)-2-fluorbiphenyl,
5% 4-(trans-4-Pentylcyclohexyl)-4'-(trans-4-propylcyclohexyl)-2-fluorbiphenyl
zeigt bei einem Twistwinkel von 220° eine steile elektrooptische Kennlinie und eine sehr geringe Blickwinkelabhängigkeit des Kontrastes.

### Beispiel 3

Eine Supertwistzelle enthaltend Dielektrikum bestehend aus
5% p-Ethylbenzoesäure-(3-fluor-4-cyanphenylester),
5% p-Propylbenzoesäure-(3-fluor-4-cyanphenylester),
9% trans-1-p-Propylphenyl-4-pentylcyclohexan,
21% trans-1-p-Methoxyphenyl-4-propylcyclohexan,
14% trans-1-p-Ethoxyphenyl-4-ppropylcyclohexan,
12% 4-Ethyl-4'-(trans-4-propylcyclohexyl)-biphenyl,
11% 4-Ethyl-4'-(trans-4-pentylcyclohexyl)-biphenyl,
4% 4,4'-Bis-(trans-4-propylcyclohexyl)-biphenyl,
4% 4,4'-Bis-(trans-4-propylcyclohexyl-2-fluorbiphenyl,
5% 4,4'-Bis-(trans-4-pentylcyclohexyl)-2-fluorbiphenyl
5% 4-(trans-4-Pentylcyclohexyl)-4'-(trans-4-propylcyclohexyl-biphenyl und
5% 4-(trans-4-Pentylcyclohexyl)-4'-(trans-4-propylcyclohexyl)-2-fluorbiphenyl
zeigt bei einem Twistwinkel von 220° eine steile elektrooptische Kennlinie und eine sehr geringe Blickwinkelabhängigkeit des Kontrastes.

### Beispiel 4

Eine Supertwistzelle enthaltend ein Dielektrikum bestehend aus
8 % p-trans-4-Propylcyclohexylbenzonitril,
4 % 4-Ethyl-4'-cyanbiphenyl,
13 % trans-1-p-Ethylphenyl-4-propylcyclohexan,
18 % trans-1-p-Methoxyphenyl-4-propylcyclohexan,
9 % trans-1-p-Ethoxyphenyl-4-propylcyclohexan,
10 % 4-Ethyl-4'-(trans-4-propylcyclohexyl)-biphenyl,
10 % 4-Ethyl-4'-(trans-4-pentylcyclohexyl)-biphenyl,
4 % 4,4'-Bis-(trans-4-propylcyclohexyl)-biphenyl,
4 % 4,4'-Bis-(trans-4-pentylcyclohexyl)-biphenyl,
4 % 4,4'-Bis-(trans-4-pentylcyclohexyl)-2-fluorbiphenyl,
4 % 4,4'-Bis-(trans-4-propylcyclohexyl)-2-fluorbiphenyl,
6 % 4-(trans-4-Pentylcyclohexyl)-4'-(trans-4-propylcyclohexyl)-biphenyl und
6 % 4-(trans-4-Pentylcyclohexyl)-4'-(trans-4-propylcyclohexyl)-2-fluorbiphenyl
zeigt bei einem Twistwinkel von 220° eine steile elektrooptische Kennlinie und eine sehr geringe Blickwinkelabhängigkeit des Kontrastes.

### Beispiel 5

Eine Supertwistzelle enthaltend ein Dielektrikum bestehend aus
10 % p-trans-4-Ethylcyclohexylbenzonitril,
17 % p-trans-4-Propylcyclohexylbenzonitril,
9 % 2-p-Cyanphenyl-5-propyl-1,3-dioxan,
6 % 2-p-Cyanphenyl-5-butyl-1,3-dioxan,
5 % p-Ethylbenzoesäure-(3-fluor-4-cyanphenylester),
7 % p-Propylbenzoesäure-(3-fluor-4-cyanphenylester),
4 % p-trans-4-Ethylcyclohexylbenzoesäure-(4-cyanphenylester),
4 % p-trans-4-Pentylcyclohexylbenzoesäure-(4-cyanphenylester),
14 % trans,trans-4'-Propyloxy-4-propylcyclohexylcyclohexan,
4 % 4-Ethyl-4'-(trans-4-propylcyclohexyl)-biphenyl,
3 % 4-Ethyl-4'-(trans-4-pentylcyclohexyl)-biphenyl,
4 % 4,4'-Bis-(trans-4-propylcyclohexyl)-biphenyl,
4 % 4,4'-Bis-(trans-4-propylcyclohexyl)-2-fluorbiphenyl,
5 % 4-(trans-4-Pentylcyclohexyl)-4'-(trans-4-propylcyclohexyl)-biphenyl und
4 % 4-(trans-4-Pentylcyclohexyl)-4'-(trans-4-propylcyclohexyl)-2-fluorbiphenyl
zeigt bei einem Twistwinkel von 160° eine steile elektrooptische Kennlinie und eine sehr geringe Blickwinkelabhängigkeit des Kontrastes.

### Beispiel 6

Eine Supertwistzelle enthaltend ein Dielektrikum bestehend aus:
5 % p-trans-4-Ethylcyclohexyl-benzonitril,
12 % p-trans-4-Propylcyclohexyl-benzonitril,
8 % p-trans-4-Butylcyclohexyl-benzonitril,
10 % p-trans-4-Pentylcyclohexyl-benzonitril,
3 % 4-Ethyl-4'-cyanbiphenyl,
6 % p-Ethylbenzoesäure-(3-fluor-4-cyanphenylester),
8 % p-Propylbenzoesäure-(3-fluor-4-cyanphenylester),
5 % 4-Cyan-4'-(trans-4-pentylcyclohexyl)-biphenyl,
11 % 4-Ethyl-4'-(trans-4-propylcyclohexyl)-biphenyl,
9 % 4-Ethyl-4'-(trans-4-pentylcyclohexyl)-biphenyl,
9 % trans-1-p-Ethoxyphenyl-4-propylcyclohexan,
3 % 4,4'-Bis-(trans-4-propylcyclohexyl)-biphenyl,
3 % 4,4'-Bis-(trans-4-propylcyclohexyl)-2-fluorbiphenyl,
4 % 4-(trans-4-Pentylcyclohexyl)-4'-(trans-4-propylcyclohexyl)-biphenyl und
4 % 4-(trans-4-Pentylcyclohexyl)-4'-(trans-4-propylcyclohexyl)-2-fluorbiphenyl
zeigt bei einem Twistwinkel von 160° eine steile elektrooptische Kennlinie und eine sehr geringe Blickwinkelabhängigkeit des Kontrastes.

### Beispiel 7

Eine Supertwistzelle enthaltend ein Dielektrikum bestehend aus
22 % p-trans-4-Propylcyclohexylbenzonitril,
19 % p-trans-4-Butylcyclohexylbenzonitril,
30 % p-trans-4-Pentylcyclohexylbenzonitril,
15 % 4-Cyan-4'-(trans-4-pentylcyclohexyl)-biphenyl und
14 % 4-p-Cyanphenyl-4'-pentylbiphenyl
zeigt bei einem Twistwinkel von 220° eine steile elektrooptische Kennlinie und eine sehr geringe Blickwinkelabhängigkeit des Kontrastes.

Die Beispiele 1 bis 6 betreffen den Bereich B und Beispiel 7 den Bereich A in Abbildung 1.

### Bildunterschriften

- Abb. 1:: Verhältnis der elastischen Konstanten für die Biegung (K₃) und Verdrillung (K₂) K₃/K₂ als Funktion der Gesamtverdrillung (β) der Zelle
- Abb. 2:: Tiltwinkel in der Mitte der Zelle α m als Funktion der reduzierten Spannung V/Vo
Gesamtverdrillung: β = 160°
Anstellwinkel der Moleküle an der Substratoberfläche: α₀ = 1°
Verhältnis der elastischen Konstanten für Biegung (K₃) und Verdrillung (K₂): K₃/K₂ = 2,67
Verhältnis der dielektrischen Anisotropie (Δε) und der Dielektrizitätskonstanten senkrecht zum
Direktor (ε_{⊥}):Δε/ε_{⊥} = 0,33
Zellendicke d = 8 µm
- Abb. 3:: Schematische Darstellung der verdrillten Flüssigkristallzelle mit Polarisator und Analysator
β = Gesamtverdrillung der Flüssigkristallschicht
ψ = Winkel zwischen dem Direktor an der 1. Substratoberfläche und der Durchlaßrichtung des Polarisators.
ψ' = Winkel zwischen dem Direktor an der ersten Substratoberfläche und der Durchlaßrichtung des Analysators
a) β = 160°
b) β = 220°
- Abb. 4:: Transmission als Funktion der reduzierten Spannung V/Vo Daten der Zelle:
Gesamtverdrillung: β = 220°
Polarisator: ψ = -45°
Analysator: ψ' = -15°
Anstellwinkel der Moleküle an der Substratoberfläche α o = 1° Verhältnis der dielastischen konstanten für Biegung (K₃) und Verdrillung (K₂): K₃/K₂ = 2,67
Verhältnis der elastischen Konstanten für Biegung (K₃) und Spreizung: K₃/K₁ = 0,4
Verhältnis der dielektrischen Anisotropie (Δε) und der Dielektrizitätskonstanten senkrecht zum
Direktor (ε_{⊥}):Δε/ε_{⊥} = 0,33
Zellendicke: d = 8 µm
Parameter: Wellenlänge des eingestrahlten Lichtes
λ₁ = 450 nm
λ₂ = 550 nm
λ₃ = 650 nm
- Abb. 5:: Winkelabhängigkeit der Transmission Daten der Zelle:
Gesamtverdrillung: β = 220°
Polarisator: ψ = -45°
Analysator: ψ' = -15°
Anstellwinkel der Moleküle an der Substratoberfläche α o = 1°
Verhältnis der dielastischen konstanten für Biegung (K₃) und Verdrillung (K₂): K₃/K₂ = 2,67
Verhältnis der elastischen Konstanten für Biegung (K₃) und Spreizung: K₃/K₁ = 0,4
Verhältnis der dielektrischen Anisotropie (Δε) und der Dielektrizitätskonstanten senkrecht zum
Direktor (ε_{⊥}):Δε/ε_{⊥} = 0,33
Zellendicke: d = 8 µm
Parameter: Reduzierte Spannung: 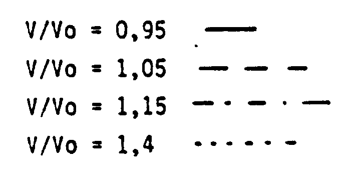
- Abb. 6:: Schematische Darstellung zur Veranschaulichung der Beobachtungswinkel ϑ und φ.
x = Richtung des Direktors an der ersten Substratoberfläche
β = Gesamtverdrillung der Zelle
ϑ = Winkel zur Zellnormalen
φ = Azimuth
- Abb.7:: Tiltwinkel α m in der Mitte der Zelle als Funktion der reduzierten Spannung V/Vo
Gesamtverdrillung: β = 220°
Anstellwinkel der Moleküle an der Substratoberfläche: α o = 1°
Verhältnis der elastischen Konstanten für Biegung (K₃) und Verdrillung (K₂): K₃/K₂ = 2,67
Verhältnis der elastischen Konstanten für die Biegung (K₃) und die Spreizung (K₁): K₃/K₁ = 0,4
Verhältnis der dielektrischen Anisotropie (Δε) und der Dielektrizitätskonstanten senkrecht zum
Direktor (ε_{⊥}):Δε/ε_{⊥} = 0,33
Zellendicke d = 8µm
Eingetragen sind die Tiltwinkel α m für die reduzierten Spannungswerte V/Vo, bei welchen die in Abb. 5 dargestellten Winkelabhängigkeiten der Transmission berechnet wurden.

## Patentansprüche

1. Verfahren zur Verbesserung der Kontrastwirkung eines multiplexierbaren elektrooptischen Anzeigeelements,
- das zwischen zwei Trägerplatten, die mit einer Umrandung eine Zelle bilden, ein nematisches Flüssigkristallmaterial mit positiver dielektrischer Anisotropie und mindestens einem chiralen Zusatz enthält;
- das einen Twistwinkel, der betragsmäßig zwischen 150° und 250° liegt, und einen kleinen Oberflächentiltwinkel aufweist, wobei der Tiltwinkel an zumindest einer Trägerplatte nicht mehr als 10° beträgt,
dadurch gekennzeichnet,
daß für im Bereich A der Fig. 1 betriebene Anzeigeelemente das Flüssigkristallmaterial so ausgewählt wird, daß das Verhältnis aus den elastischen Konstanten für Biegung und Spreizung K₃/K₁ so groß ist, daß eine bistabile, steile elektrooptische Kennlinie erhalten wird,
oder daß für im Bereich B der Fig. 1 betriebene Anzeigeelemente das Flüssigkristallmaterial so ausgewählt wird, daß das Verhältnis aus den elastischen Konstanten für Biegung und Spreizung K₃/K₁ so klein ist, daß eine steile, stabile elektrooptische Kennlinie erhalten wird.

2. Verfahren nach Anspruch 1, dadurch gekennzeichnet, daß für im Bereich B der Fig. 1 betriebene Anzeigeelemente das Flüssigkristallmaterial so ausgewählt wird, daß das Verhältnis aus den elastischen Konstanten für Biegung und Spreizung K₃/K₁ kleiner ist als 1,6.

3. Verfahren nach einem der Ansprüche 1-2, dadurch gekennzeichnet, daß das Flüssigkristallmaterial von im Bereich B der Fig. 1 betriebenen Anzeigeelementen so ausgewählt wird, daß es mindetens 15 Gewichtsprozent eines Gemisches aus mindestens 2 flüssigkristallinen Verbindungen enthält, die jeweils mindestens ein Strukturelement, ausgewählt aus der Reihe I - XI, enthalten, wobei die Strukturelemente I - IV auch durch F, Cl, CH₃ und/oder CN substituiert sein können oder in Form der entsprechenden N-Oxide vorliegen können:

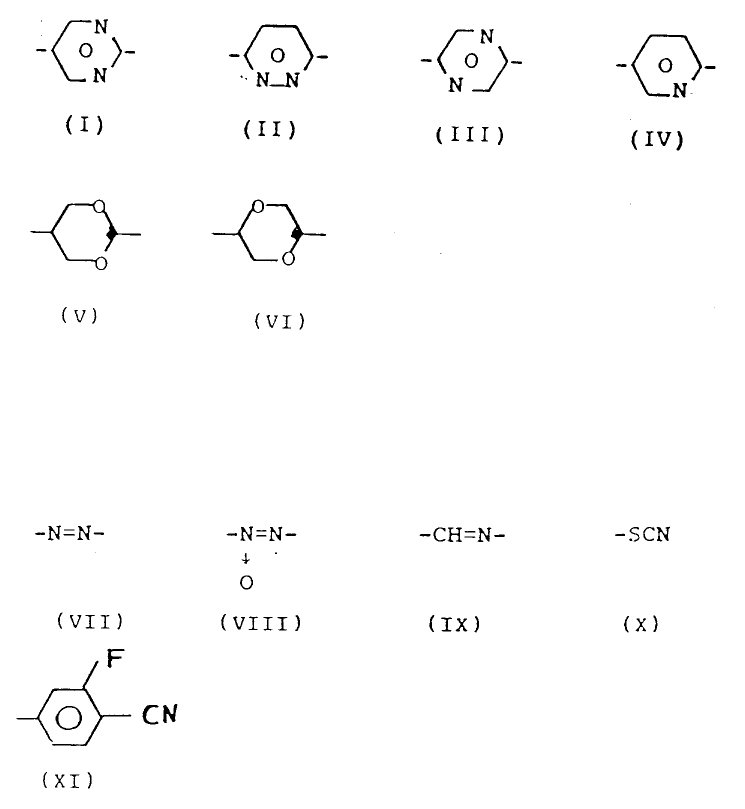

4. Verfahren nach einem der Ansprüche 1-3, dadurch gekennzeichnet, daß das Flüssigkristallmaterial von im Bereich B der Fig. 1 betriebenen Anzeigeelementen so ausgewählt wird, daß es weniger als 30 Gew.% an assoziierenden Verbindungen enthält.

5. Verfahren nach Anspruch 1, dadurch gekennzeichnet, daß das Flüssigkristallmaterial von im Bereich A der Fig. 1 betriebenen Anzeigeelementen so ausgewählt wird, daß es mindetens 15 Gewichtsprozent eines Gemisches aus mindestens 2 flüssigkristallinen Verbindungen enthält, die jeweils mindestens ein Strukturelement, ausgewählt aus der Reihe XII - XIV, enthalten:

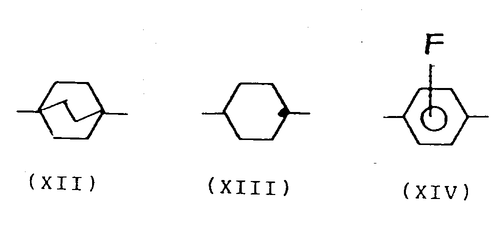

6. Multiplexierbares elektrooptisches Anzeigeelement mit verbesserter Kontrastwirkung,
- das zwischen zwei Trägerplatten, die mit einer Umrandung eine Zelle bilden, ein nematisches Flüssigkristallmaterial mit positiver dielektrischer Anisotropie und mindestens einem chiralen Zusatz enthalt,
- das einen Twistwinkel, der betragsmäßig zwischen 150° und 250° liegt, und einen kleinen Oberflächentiltwinkel aufweist, wobei der Tiltwinkel an zumindest einer Trägerplatte nicht mehr als 10° betragt,
dadurch gekennzeichnet,
daß das Flüssigkristallmaterial von im Bereich A der Fig. 1 betriebenen Anzeigeelementen einen so großen Wert für das Verhältnis aus den elastischen Konstanten für Biegung und Spreizung K₃/K₁ aufweist, daß das Anzeigeelement eine bistabile, steile electrooptische Kennlinie aufweist,
oder daß das Flüssigkristallmaterial von im Bereich B der Fig. 1 betriebenen Anzeigeelementen einen so kleinen Wert für das Verhältnis aus den elastischen Konstanten für Biegung und Spreizung K₃/K₁ aufweist, daß das Anzeigeelement eine stabile, steile electrooptische Kennlinie aufweist.

7. Anzeigeelement nach Anspruch 6, dadurch gekennzeichnet, daß das Flüssigkristallmaterial von im Bereich B der Fig. 1 betriebenen Anzeigeelementen für das Verhältnis aus den elastischen Konstanten für Biegung und Spreizung K₃/K₁ einen Wert der kleiner ist als 1,6, aufweist.

8. Anzeigeelement nach Anspruch 6 oder 7, dadurch gekennzeichnet, daß das Flüssigkristallmaterial von im Bereich B der Fig. 1 betriebenen Anzeigeelementen mindetens 15 Gewichtsprozent eines Gemisches aus mindestens 2 flüssigkristallinen Verbindungen enthält, die jeweils mindestens ein Strukturelement, ausgewählt aus der Reihe I - XI, enthalten, wobei die Strukturelemente I - IV auch durch F, Cl, CH₃ und/oder CN substituiert sein können oder in Form der entsprechenden N-Oxide vorliegen können:

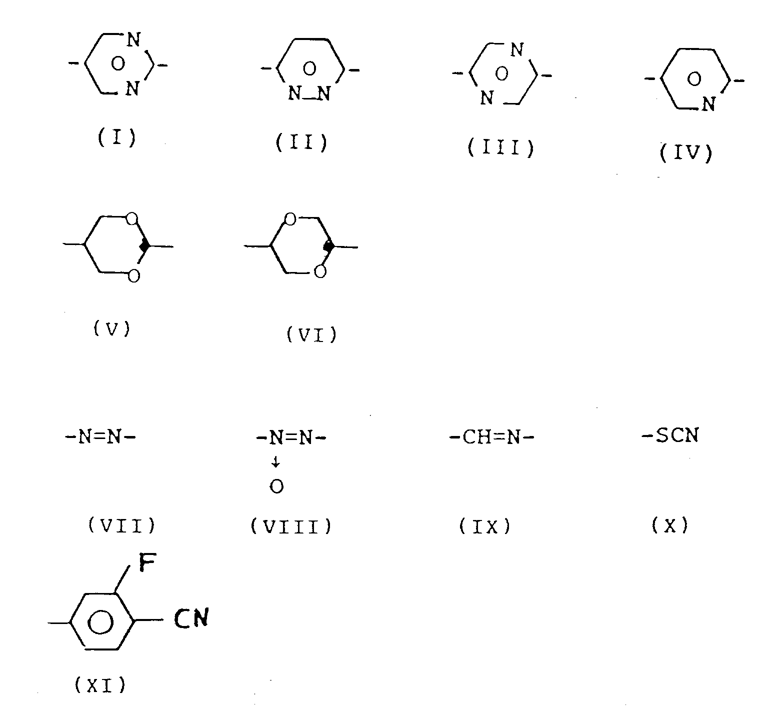

9. Anzeigeelement nach einem der Ansprüche 6-8, dadurch gekennzeichnet, daß das Flüssigkristallmaterial von im Bereich B der Fig. 1 betriebenen Anzeigeelementen weniger als 30 Gew.% an assoziierenden Verbindungen enthält.

10. Anzeigeelement nach Anspruch 6, dadurch gekennzeichnet, daß das Flüssigkristallmaterial von im Bereich A der Fig. 1 betriebenen Anzeigeelementen mindetens 15 Gewichtsprozent eines Gemisches aus mindestens 2 flüssigkristallinen Verbindungen enthält, die jeweils mindestens ein Strukturelement, ausgewahlt aus der Reihe XII - XIV, enthalten:

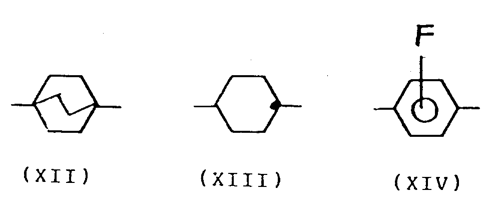

## Claims

1. Method of improving the contrast effect of an electrooptical display element which can be multiplexed,
- which contains, between two support plates which, with an edging, form a cell, a nematic liquid crystal material with positive dielectric anisotropy and at least one chiral additive,
- and which has a twist angle with a value between 150° and 250°, and a small surface tilt angle, the tilt angle to at least one support plate being not more than 10°, characterised in that
for display elements operated in region A of Fig. 1, the liquid crystal material is chosen such that the ratio of the elastic constants for bending and spreading K₃/K₁ is high enough for a bistable, steep electrooptical characteristic line to be obtained,
or in that, for display elements operated in region B of Fig. 1, the liquid crystal material is chosen such that the ratio of the elastic constants for bending and spreading K₃/K₁ is low enough for a steep, stable electrooptical characteristic line to be obtained.

2. Method according to Claim 1, characterised in that for display elements operated in region B of Fig. 1, the liquid crystal material is chosen such that the ratio of the elastic constants for bending and spreading K₃/K₁ is less than 1.6.

3. Method according to one of Claims 1-2, characterised in that the liquid crystal material of display elements operated in region B of Fig. 1 is chosen such that it contains at least 15% by weight of a mixture of at least two liquid crystal compounds, each of which contains at least one structural element selected from series I-XI, it also being possible for the structural elements I-IV to be substituted by F, Cl, CH₃ and/or CN, or to be in the form of the corresponding N-oxides:

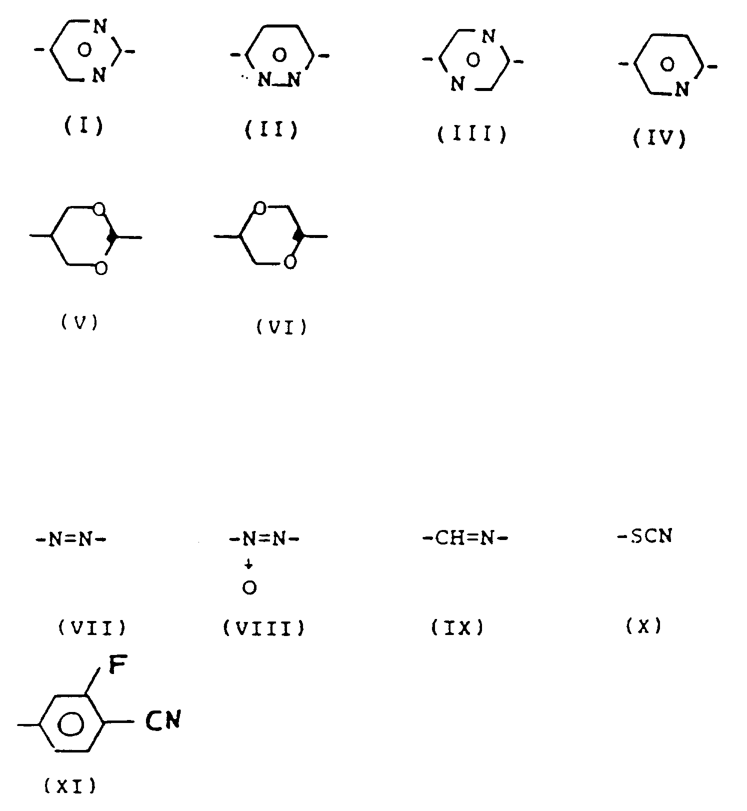

4. Method according to one of Claims 1-3, characterised in that the liquid crystal material of display elements operated in region B of Fig. 1 is chosen such that it contains less than 30% by weight of associating compounds.

5. Method according to Claim 1, characterised in that the liquid crystal material of display elements operated in region A of Fig. 1 is chosen such that it contains at least 15% by weight of a mixture of at least 2 liquid crystal compounds, each of which contains at least one structural element selected from series XII-XIV:

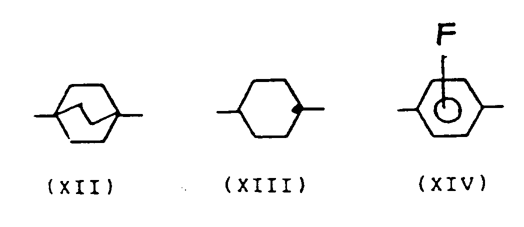

6. Electrooptical display element which can be multiplexed and has an improved contrast effect,
- which contains, between two support plates which, with an edging, form a cell, a nematic liquid crystal material with positive dielectric anisotropy and at least one chiral additive,
- and has a twist angle with a value between 150° and 250°, and a small surface tilt angle, the tilt angle to at least one support plate being not more than 10°, characterised in that
the liquid crystal material of display elements operated in region A of Fig. 1 has a value for the ratio of the elastic constants for bending and spreading K₃/K₁ which is high enough for the display element to have a bistable, steep electrooptical characteristic line,
or in that the liquid crystal material of display elements operated in region B of Fig. 1 has a value for the ratio of the elastic constants for bending and spreading K₃/K₁ which is low enough for the display element to have a stable, steep electrooptical characteristic line.

7. Display element according to Claim 6, characterised in that the liquid crystal material of display elements operated in region B of Fig. 1 has a value for the ratio of the elastic constants for bending and spreading K₃/K₁ which is less than 1.6.

8. Display element according to Claim 6 or 7, characterised in that the liquid crystal material of display elements operated in region B of Fig. 1 contains at least 15% by weight of a mixture of at least two liquid crystal compounds, each of which contains at least one structural element selected from series I-XI, it being possible for the structural elements I-IV also to be substituted by F, Cl, CH₃ and/or CN, or to be in the form of the corresponding N-oxides:

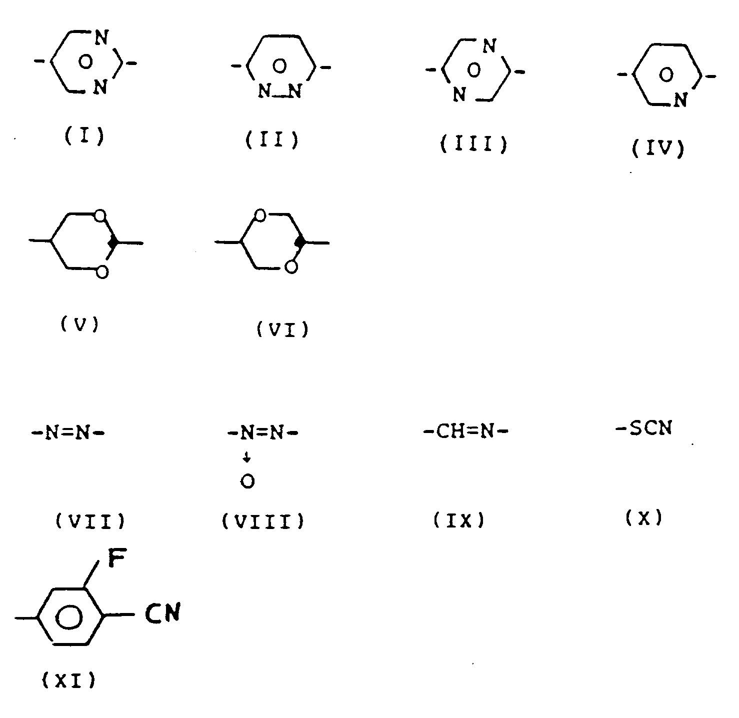

9. Display element according to one of Claims 6-8, characterised in that the liquid crystal material of display elements operated in region B of Fig. 1 contains less than 30% by weight of associating compounds.

10. Display element according to Claim 6, characterised in that the liquid crystal material of display elements operated in region A of Fig. 1 contains at least 15 percent by weight of a mixture of at least 2 liquid crystal compounds, each of which contains at least one structural element selected from series XII-XIV:

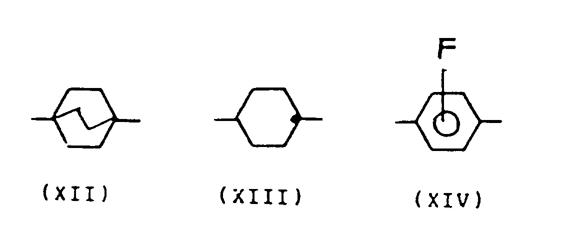

## Revendications

1. Procédé pour l'amélioration de l'effet de contraste d'un élément d'affichage électro-optique apte au multiplexage,
- qui contient entre deux plaques de support, qui, avec une bordure, forment une cellule, un matériau de type cristal liquide nématique à anisotropie diélectrique positive, et au moins un additif chiral,
- qui présente un angle de torsion, qui est compris entre 150 et 250°, et un petit angle d'inclinaison de la surface, l'angle d'inclinaison n'excédant pas 10° sur au moins une plaque de support,
caractérisé en ce que pour des éléments d'affichage fonctionnant dans la zone A de la figure 1, le matériau de type cristal liquide est choisi de manière que le rapport des constantes élastiques pour la courbure et le décalage K₃/K₁ soit suffisamment élevé pour l'obtention d'une courbe électro-optique caractéristique bistable, à forte pente, ou en ce que, pour des éléments d'affichage fonctionnant dans la zone B de la figure 1, le matériau de type cristal liquide est choisi de manière que le rapport des constantes élastiques pour la courbure et le décalage K₃/K₁ soit suf fisamment faible pour l'obtention d'une courbe électro-optique caractéristique stable, à forte pente.

2. Procédé selon la revendication 1, caractérisé en ce que, pour des éléments d'affichage fonctionnant dans la zone B de la figure 1, le matériau de type cristal liquide est choisi de manière que le rapport des constantes élastiques pour la courbure et le décalage K₃/K₁ soit inférieur à 1,6.

3. Procédé selon l'une des revendications 1-2, caractérisé en ce que le matériau de type cristal liquide d'éléments d'affichage fonctionnant dans la zone B de la figure 1 est choisi de manière à contenir au moins 15 % en poids d'un mélange d'au moins 2 composés de type cristal liquide, qui contiennent chacun au moins un élément structural choisi dans les séries I à XI, les éléments structuraux I à IV pouvant être substitués par F, Cl, CH₃ et/ou CN ou pouvant se trouver sous forme des N-oxydes correspondants:

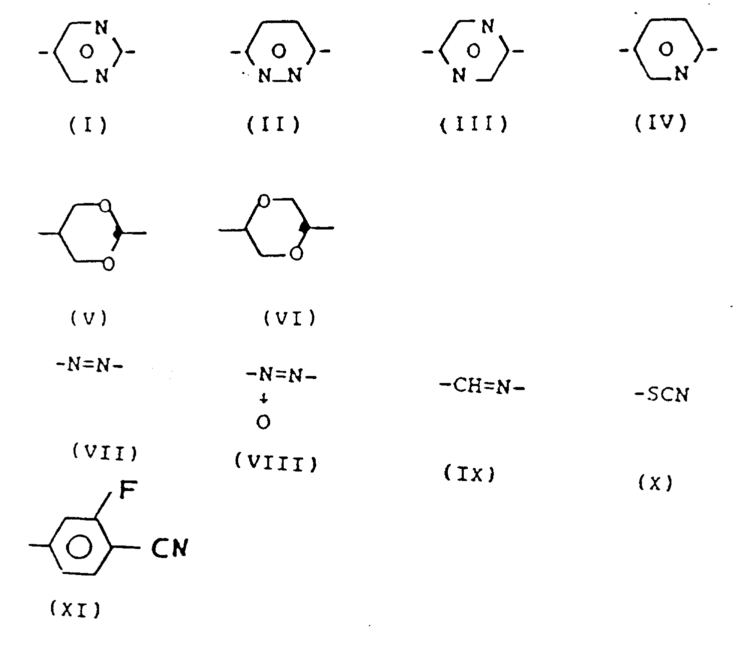

4. Procédé selon l'une des revendications 1 à 3, caractérisé en ce que le matériau de type cristal liquide d'éléments d'affichage fonctionnant dans la zone B de la figure 1 est choisi de manière à contenir au moins 30 % en poids de composés s'associant.

5. Procédé selon la revendication 1, caractérisé en ce que le matériau de type cristal liquide d'éléments d'affichage fonctionnant dans la zone A de la figure 1 est choisi de manière à contenir au moins 15 % en poids d'un mélange d'au moins 2 composés de type cristal liquide, qui contiennent chacun au moins un élément structural choisi dans les séries XII à XIV:

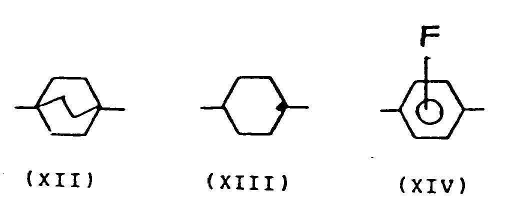

6. Elément d'affichage électro-optique apte au multiplexage, à effet de contraste amélioré,
- qui contient entre deux plaques de support, qui, avec une bordure, forment une cellule, un matériau de type cristal liquide nématique à anisotropie diélectrique positive, et au moins un additif chiral,
- qui présente un angle de torsion, qui est compris entre 150 et 250°, et un petit angle d'inclinaison de la surface, l'angle d'inclinaison n'excédant pas 10° sur au moins une plaque de support,
caractérisé en ce que
le matériau de type cristal liquide d'éléments d'affichage fonctionnant dans la zone A de la figure 1 présente une valeur suffisamment élevée du rapport des constantes élastiques pour la courbure et le décalage K₃/K₁, pour que l'élément d'affichage présente une courbe électro-optique caractéristique bistable, à forte pente,
ou en ce que le matériau de type cristal liquide d'éléments d'affichage fonctionnant dans la zone B de la figure 1 présente une valeur suffisamment faible du rapport des constantes élastiques pour la courbure et le décalage K₃/K₁, pour que l'élément d'affichage présente une courbe électro-optique caractéristique stable, à forte pente.

7. Elément d'affichage selon la revendication 6, caractérisé en ce que le matériau de type cristal liquide d'éléments d'affichage fonctionnant dans la zone B de la figure 1 présente une valeur du rapport des constantes élastiques pour la courbure et le décalage K₃/K₁ qui est inférieure à 1,6.

8. Elément d'affichage selon la revendication 6 ou 7, caractérisé en ce que le matériau de type cristal liquide d'éléments d'affichage fonctionnant dans la zone B de la figure 1 contient au moins 15 % en poids d'un mélange d'au moins 2 composés de type cristal liquide qui contiennent chacun au moins un élément structural choisi dans les séries I à XI, les éléments structuraux I à IV pouvant également être substitués par F, Cl, CH₃ et/ou CN ou pouvant se trouver sous forme des N-oxydes correspondants:

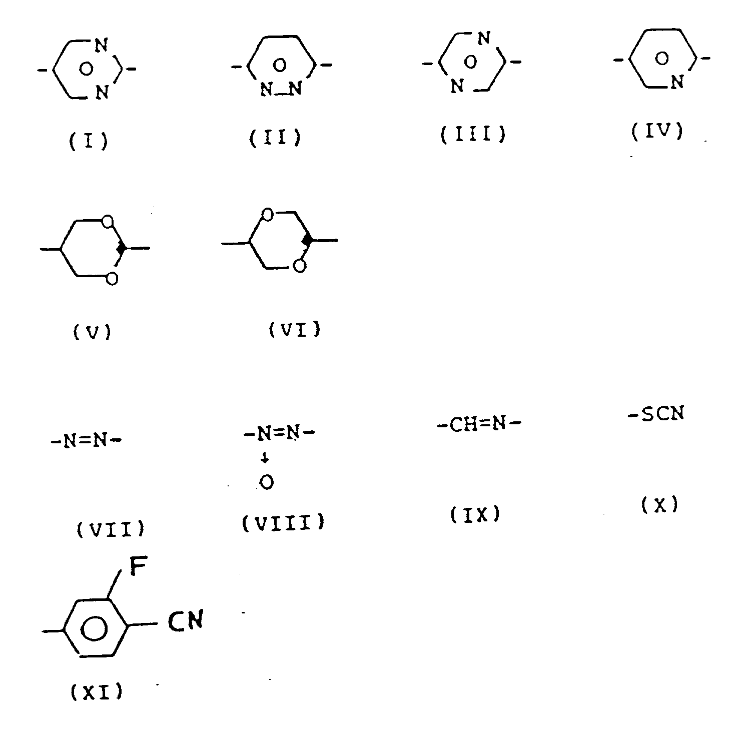

9. Elément d'affichage selon l'une des revendications 6 à 8, caractérisé en ce que le matériau de type cristal liquide d'éléments d'affichage fonctionnant dans la zone B de la figure 1 contient moins de 30 % en poids de composés s'associant.

10. Elément d'affichage selon la revendication 6, caractérisé en ce que le matériau de type cristal liquide d'éléments d'affichage fonctionnant dans la zone A de la figure 1 contient au moins 15 % en poids d'un mélange d'au moins 2 composés de type cristal liquide qui contiennent au moins un élément structural choisi dans les séries XII à XIV:
